# EUROPÄISCHE PATENTSCHRIFT

(11) **EP 3 009 806 B1**
(45) Veröffentlichungstag und Bekanntmachung des Hinweises auf die Patenterteilung: **14.12.2016**
(21) Anmeldenummer: 14188801.6
(22) Anmeldetag: 14.10.2014
(51) Int. Cl.: G01D 5/244, B23Q 11/00, G01B 3/10

(54) **Positionsmesseinrichtung mit Vorrichtung zur Kompensation von Fehlern durch thermische Dilatation eines Massstabes**
Position measuring device with means for compensating errors due to thermal dilatation of a scale
Dispositif de mesure de position avec des moyens pour compenser des erreurs resultant de la dilatation thermique d'une échelle

(43) Veröffentlichungstag der Anmeldung: 20.04.2016
(73) Patentinhaber: Dr. Johannes Heidenhain GmbH, 83301 Traunreut (DE)
(72) Erfinder: Fischer, Peter, 83253 Rimsting (DE)

(56) Entgegenhaltungen:
- EP-A1- 2 636 991
- DE-C1- 3 633 573

## Beschreibung

### GEBIET DER TECHNIK

Die vorliegende Erfindung betrifft eine Positionsmesseinrichtung nach dem Oberbegriff des Anspruchs 1.

### STAND DER TECHNIK

Derartige Positionsmesseinrichtungen werden insbesondere in Bearbeitungsmaschinen zur Messung der Relativlage eines Werkzeugs bezüglich eines zu bearbeitenden Werkstücks, in Koordinatenmessmaschinen zur Ermittlung von Lage und Abmessungen von Prüfobjekten sowie auch in der Halbleiterindustrie eingesetzt. Dabei wird der Maßstab an einem ersten Objekt, z. B. an der Antriebseinheit (z. B. Linearmotor) direkt angebaut oder der Maßstab an einem durch die Antriebseinheit angetriebenen Bauteil angebaut. Stationär gegenüber dem bewegten Maßstab ist die Abtasteinheit der Positionsmesseinrichtung an einem zweiten Objekt angeordnet, dessen Position gemessen werden soll.

Bei der Positionsmessung ist die temperaturbedingte Verlagerung des Maßstabs gegenüber dem ersten Objekt zu berücksichtigen. Gemäß der WO 2012/114168 A1 wird hierzu die Verlagerung des Maßstabs am Referenzpunkt des Maßstabs mittels eines Tasters direkt gemessen. Zur Erfassung der temperaturbedingten Verlagerung des Maßstabs außerhalb des Referenzpunktes sind dem Maßstab Temperatursensoren zugeordnet. Die temperaturbedingte Verlagerung des Maßstabs kann an diesen Positionen außerhalb des Referenzpunktes aus der gemessenen Temperatur und dem thermischen Ausdehnungskoeffizienten des Maßstabmaterials ermittelt werden.

Die DE 36 33 573 C1 und die EP 2 636 991 A1 zeigen ebenfalls Verfahren zur Korrektur von temperaturbedingten Längenänderungen des Maßstabs in Positionsmesssystemen.

### ZUSAMMENFASSUNG DER ERFINDUNG

Der vorliegenden Erfindung liegt die Aufgabe zugrunde, eine Positionsmesseinrichtung anzugeben, die kompakt aufgebaut ist und mit der die temperaturbedingte Verlagerung des Maßstabs, also die Längenausdehnung des Maßstabs, möglichst genau ermittelt werden kann. Diese Aufgabe wird erfindungsgemäß durch eine Positionsmesseinrichtung mit den Merkmalen des Anspruchs 1 gelöst.

Die Positionsmesseinrichtung umfasst eine erste Baugruppe und eine zweite Baugruppe, wobei
die erste Baugruppe ein Profil aufweist, das einen Maßstab mit einer ersten Messteilung trägt, und
die zweite Baugruppe eine erste Abtasteinheit umfasst,
und zur Messung der Position eines ersten Objektes gegenüber einem zweiten Objekt die erste Baugruppe am ersten zu messenden Objekt und die zweite Baugruppe am zweiten zu messenden Objekt anbringbar ist und die erste Abtasteinheit entlang eines Verfahrweges in Messrichtung verfahrbar ist und dabei die erste Messteilung des Maßstabs abtastet,
der Maßstab eine zweite Messteilung aufweist, und am Profil zumindest eine zweite Abtasteinheit angeordnet ist, mit der die zweite Messteilung abtastbar ist und die zur Messung der Verlagerung des Maßstabs gegenüber dem ersten Objekt derart angeordnet ist, dass ein kollisionsfreies Verfahren der ersten Abtasteinheit entlang des Verfahrweges von der zweiten Abtasteinheit senkrecht zur Messrichtung beabstandet ermöglicht ist.

Die Erfindung ist besonders vorteilhaft bei Positionsmesseinrichtungen für lange Messlängen einsetzbar. In diesem Fall sind am Profil mehrere in Messrichtung voneinander beabstandete zweite Abtasteinheiten vorgesehen.

Vorteilhaft ist es, wenn die zweite Abtasteinheit in Messrichtung elastisch nachgiebig mit dem Profil verbunden ist und die zweite Abtasteinheit derart ausgebildet ist, dass sie am ersten Objekt stationär befestigbar ist, indem diese beispielsweise eine Bohrung zum Anschrauben an dem ersten Objekt aufweist. Durch diese Maßnahme kann während des Messbetriebs der Positionsmesseinrichtung die Verlagerung des Maßstabes gegenüber dem ersten Objekt ohne Einfluss des Profils gemessen werden. Die elastische Verbindung zwischen der zweiten Abtasteinheit und dem Profil kann mittels eines in Messrichtung auslenkbaren Festkörpergelenkes realisiert sein.

Eine besonders platzsparende und geschützte Anordnung der zweiten Abtasteinheit ist gewährleistet, wenn das Profil eine Ausnehmung aufweist, in welche die zweite Abtasteinheit eingesetzt ist.

Das Profil ist vorzugsweise ein Hohlprofil, in deren Innenraum der Maßstab angeordnet ist und der Innenraum den Verfahrweg der ersten Abtasteinheit bildet. In diesem Fall ist es besonders vorteilhaft, wenn die zweite Abtasteinheit in eine Ausnehmung des Profils eingesetzt ist und zwischen dem Profil und der zweiten Abtasteinheit eine Dichtung vorgesehen ist, welche den Innenraum gegenüber der äußeren Umgebung abdichtet.

Vorteilhaft ist es, wenn der Maßstab ausschließlich an einer einzigen Position am Profil ortsfest fixiert ist (Fixpunkt) und im übrigen Bereich derart am Profil angeordnet ist, dass er sich relativ zum Profil in Messrichtung ausdehnen kann. Zumindest eine zweite Abtasteinheit ist an einer Position angeordnet an der sich der Maßstab gegenüber dem Profil in Messrichtung ausdehnen kann. Ist der Maßstab ein Maßband, dann kann dieses an einem Ende ortsfest am Profil festgelegt sein (Fixpunkt) und am anderen Ende gespannt sein.

Die relative Verlagerung von Maßstab und Profil in Messrichtung außerhalb des Fixpunktes wird ermöglicht, indem der Maßstab an einer Oberfläche des Profils aufliegt oder unter Zwischenschaltung einer elastischen Schicht, beispielsweise in Form eines elastischen Klebstoffes oder eines Ölfilms, am Profil aufliegt.

Weiterhin vorteilhaft ist, wenn das Maßband in einer Längsnut des Profils angeordnet ist.

Der mit dieser erfindungsgemäß ausgestalteten Positionsmesseinrichtung gemessene Wert der Verlagerung des Maßstabs gegenüber einer der zweiten Abtasteinheiten und somit gegenüber dem ersten Objekt kann zur Korrektur der mit der ersten Abtasteinheit gemessenen Position verwendet werden.

Vorteilhafte Ausführungen der erfindungsgemäßen Positionsmesseinrichtung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine schematische Darstellung einer erfindungsgemäßen Positionsmesseinrichtung;
- Figur 2: eine erste Ansicht des Maßstabes der Positionsmesseinrichtung aus Figur 1;
- Figur 3: eine zweite Ansicht des Maßstabes der Positionsmesseinrichtung aus Figur 1;
- Figur 4: einen Querschnitt der Positionsmesseinrichtung im Detail;
- Figur 5: eine Ansicht der Positionsmesseinrichtung gemäß Figur 4;
- Figur 6: eine vergrößerte Darstellung aus der Figur 5, und
- Figur 7: eine alternative Ausgestaltung eines Maßstabs.

### BESCHREIBUNG DER AUSFÜHRUNGSFORMEN

Mit der Positionsmesseinrichtung soll die Position eines ersten Objektes 100 gegenüber einem zweiten Objekt 200 in Messrichtung X gemessen werden. Diese Positionsmesseinrichtung umfasst eine erste Baugruppe 1 und eine zweite Baugruppe 2.

Die erste Baugruppe 1 umfasst ein Profil 10 mit einem Maßstab 40 mit einer Messteilung 41, die bei der Positionsmessung von einer Abtasteinheit 20 abgetastet wird, die entlang eines Verfahrweges in Messrichtung X verfahrbar ist und dabei die Messteilung 41 des Maßstabs 40 abtastet. Die erste Baugruppe 1 ist zur Positionsmessung am ersten zu messenden Objekt 100 befestigt.

Die zweite Baugruppe 2 umfasst die Abtasteinheit 20, die zur Positionsmessung des ersten Objektes 100 gegenüber dem zweiten Objekt 200 am zweiten Objekt 200 befestigt ist. Die Abtasteinheit 20 ist zur berührungslosen Abtastung der Messteilung 41 des Maßstabs 40 ausgebildet. Im vorteilhaften Ausführungsbeispiel ist die Abtasteinheit 20 zur optoelektrischen Abtastung ausgebildet und umfasst eine Lichtquelle 22 und einen Detektor 23. Bei der Abtastung der Messteilung 41 erzeugt die Abtasteinheit 20 in bekannter Weise positionsabhängige elektrische Abtastsignale.

Die Positionsmesseinrichtung ist erfindungsgemäß dazu ausgebildet zusätzlich die Verlagerung des Maßstabs 40 gegenüber dem ersten Objekt 100 an zumindest einer Messposition P1, P2 zu erfassen. Hierzu weist der Maßstab 40 eine weitere Messteilung 42 auf. Zur berührungslosen Abtastung dieser weiteren Messteilung 42 umfasst die erste Baugruppe 1 zumindest eine Abtasteinheit 30.

Diese weitere Abtasteinheit 30 (auch zweite Abtasteinheit 30 genannt) ist zur berührungslosen, insbesondere zur optoelektrischen Abtastung ausgebildet und umfasst eine Lichtquelle 31 und einen Detektor 32.

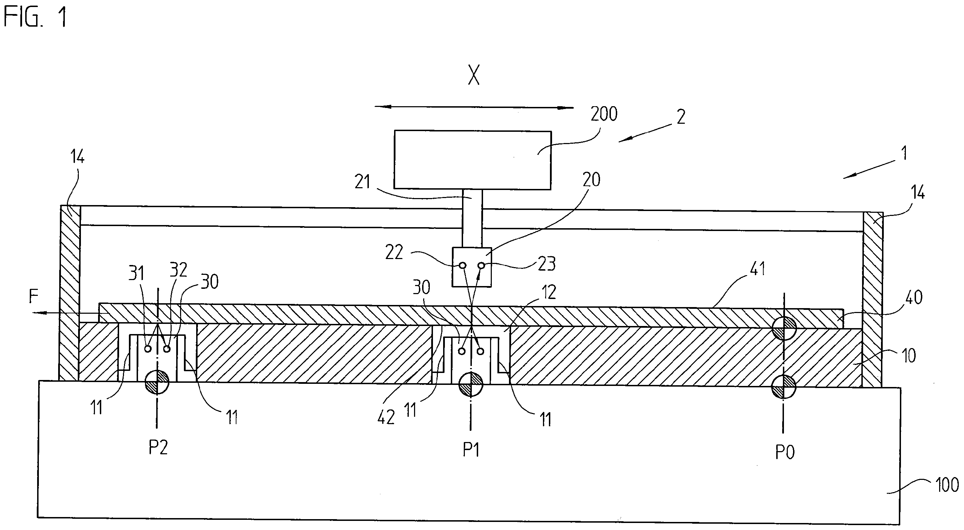

Besonders vorteilhaft ist es, wenn die Positionsmesseinrichtung dazu ausgebildet ist die Verlagerung des Maßstabs 40 gegenüber dem ersten Objekt 100 an mehreren in Messrichtung X voneinander beabstandeten Positionen P1 und P2 zu erfassen. Wie in Figur 1 dargestellt ist, weist hierfür die Positionsmesseinrichtung an jeder der Positionen P1 und P2 jeweils eine der weiteren Abtasteinheiten 30 auf. Die Abtasteinheiten 30 sind dazu ausgebildet an diesen Positionen P1 und P2 jeweils ortsfest am ersten Objekt 100 fixiert zu werden.

Die zumindest eine weitere Abtasteinheit 30 ist derart angeordnet, dass im Messbetrieb zur Messung der Position in Messrichtung X ein kollisionsfreies Verfahren der ersten Abtasteinheit 20 entlang des Verfahrweges von der zweiten Abtasteinheit 30 senkrecht zur Messrichtung X beabstandet ermöglicht ist. Senkrecht zur Messrichtung X beabstandet bedeudet dabei, dass die Abtasteinheit 20 von der weiteren Abtasteinheit 30 vorbeifahren kann.

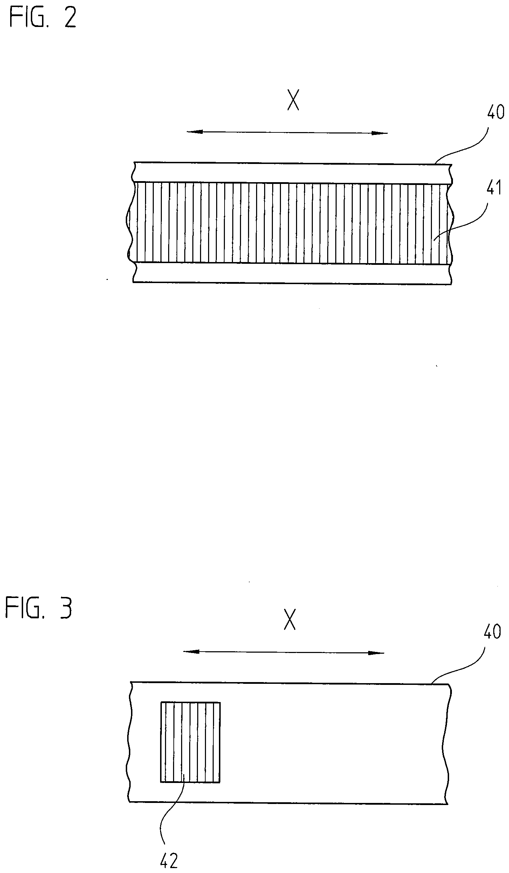

Die Messteilung 41 ist auf einer Seite des Maßstabs 40 angeordnet. Eine Draufsicht ist in der Figur 2 dargestellt. Die weitere Messteilung 42 ist auf der Rückseite des Maßstabs 40 angeordnet. Eine Ansicht der Rückseite des Maßstabs 40 ist in Figur 3 dargestellt. Die weitere Messteilung 42 ist zumindest im Bereich der weiteren Abtasteinheiten 30 am Maßstab 40 vorgesehen.

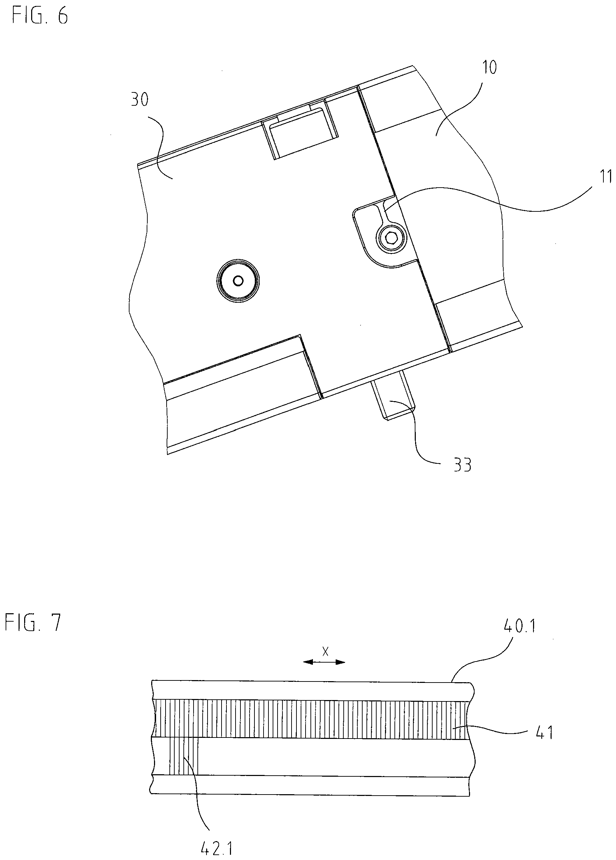

Die weitere Messteilung 42.1 kann alternativ auch neben der Messteilung 41 angeordnet sein, also in einer Richtung senkrecht zur Messrichtung X betrachtet neben der Messteilung 41 auf einer gemeinsamen Seite des Maßstabs 40.1. Eine Draufsicht eines derartig ausgebildeten Maßstabs 40.1 ist in Figur 7 dargestellt.

Die Erfindung ermöglicht es, dass der Maßstab 40 zur Positionsmessung an einer Position von der Abtasteinheit 20 abgetastet werden kann und an der gleichen Position oder zumindest möglichst nahe daran von der weiteren Abtasteinheit 30 abgetastet werden kann. Die Verlagerung des Maßstabes 40 ist somit an der Position bzw. zumindest möglichst nahe an der Position erfassbar, an der auch die Positionsmessung der Relativposition der beiden Objekte 100 und 200 erfolgt. In Figur 1 ist dies die mit P1 bezeichnete Momentanposition.

Ein kompakter und besonders einfach handhabbarer Aufbau der Positionsmesseinrichtung ergibt sich indem die erste Baugruppe 1 ein Profil 10 umfasst, das einerseits als Träger des Maßstabs 40 dient und an dem andererseits die zumindest eine weitere Abtasteinheit 30 befestigt ist. In der Figur 1 ist schematisch dargestellt, dass an dem Profil 10 mehrere in Messrichtung X voneinander beabstandete weitere Abtasteinheiten 30 befestigt sind.

Das Profil 10 ist ein Hohlprofil, in dessen Innenraum der Maßstab 40 angeordnet ist. Die Abtasteinheit 20 ist innerhalb dieses Hohlprofils angeordnet und in Messrichtung X verfahrbar, so dass der Innenraum den Verfahrweg der Abtasteinheit 20 in Messrichtung X bildet. Die Abtasteinheit 20 ist mittels eines Montagefußes 21 an dem zweiten zu messenden Objekt 200 ortsfest montierbar. Das Hohlprofil 10 schützt den Maßstab 40 sowie die Abtasteinheit 20 zumindest seitlich vor schädlichen Umwelteinflüssen. Endseitig ist das Hohlprofil 10 mittels jeweils eines Deckels 14 verschlossen.

Das Profil 10 weist Ausnehmungen 12 auf, in welche jeweils eine der Abtasteinheiten 30 eingesetzt ist. Zwischen dem Profil 10 und der in die Ausnehmung 12 eingesetzten Abtasteinheit 30 ist eine Dichtung 13 angeordnet.

Der Maßstab 40 ist als Maßband, vorzugsweise als Metallband, insbesondere Stahlband ausgebildet. Die Abtasteinheit 20 tastet die in den Hohlraum des Hohlprofils 10 weisende Messteilung 41 ab.

Die zumindest eine weitere Abtasteinheit 30 ist derart am Hohlprofil 10 angeordnet, dass sie die auf der Rückseite des Maßstabs 40 aufgebrachte Messteilung 42 abtasten kann. Die Abtasteinheit 30 ist derart ausgebildet und angeordnet, dass sie ortsfest an dem ersten zu messenden Objekt 100 befestigbar ist, insbesondere mittels einer Schraube 33 daran anschraubbar ist.

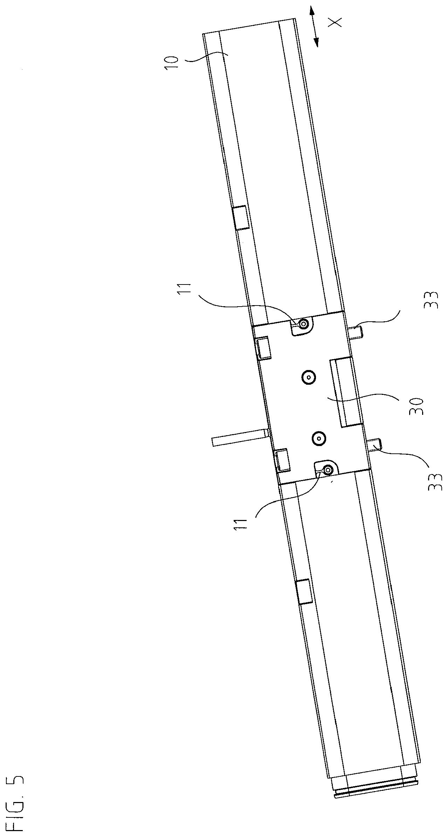

Die Abtasteinheit 30 ist einerseits an dem Hohlprofil 10 in Messrichtung X elastisch nachgiebig befestigt und andererseits derart ausgebildet, dass sie am ersten Objekt 100 ortsfest befestigbar ist. Dadurch ist gewährleistet, dass das Hohlprofil 10 keine Zwangskräfte auf die Abtasteinheit 30 ausübt, welche die Messung der Verlagerung zwischen dem ersten Objekt 100 und dem Maßstab 40 verfälscht. Im konkreten Ausführungsbeispiel ist hierzu zwischen der Abtasteinheit 30 und dem Hohlprofil 10 ein in Messrichtung X elastisch nachgiebiges Element, insbesondere in Form eines Festkörpergelenkes 11 angeordnet. Das Festkörpergelenk 11 hält einerseits die Abtasteinheit 30 am Profil 10 und erlaubt andererseits eine Bewegung zwischen der Abtasteinheit 30 und dem Profil 10 in Messrichtung X. Wie in den Figuren 1 und 5 dargestellt ist, ist beidseits der Abtasteinheit 30 jeweils eines der Festkörpergelenke 11 angeordnet.

Der Maßstab 40 kann auf unterschiedliche Weise am Profil 10 angeordnet sein. Eine Möglichkeit besteht darin, dass er über seine gesamte Länge vom Profil 10 entkoppelt ist. Dies kann realisiert sein, indem er einfach auf dem Profil 10 aufliegt oder über eine Entkopplungsschicht daran befestigt ist. Die Entkopplungsschicht kann ein elastischer Klebstoff oder ein Flüssigkeitsfilm sein. Eine besonders vorteilhafte Möglichkeit zur Anbringung des Maßstabs 40 am Profil 10 besteht darin, dass dieser ausschließlich an einer einzigen Position P0 am Profil 10 ortsfest fixiert ist und im übrigen Bereich derart am Profil 10 befestigt ist, dass er sich relativ zum Profil 10 in Messrichtung X ausdehnen kann. An den Positionen P1, P2 der zweiten Abtasteinheiten 30 ist der Maßstab 40 relativ zum Profil 10 in Messrichtung X längsbeweglich gelagert.

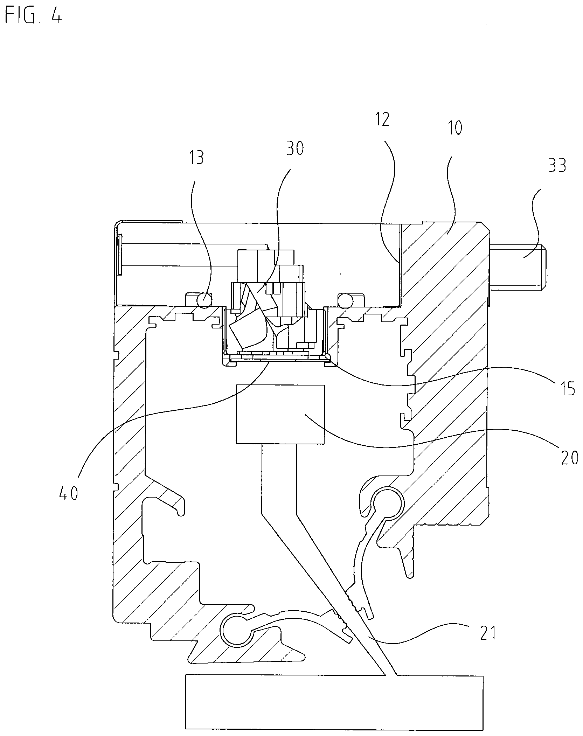

Wenn die Positionsmesseinrichtung für besonders lange Messlängen ausgelegt werden soll, dann ist der Maßstab 40 vorzugsweise ein Maßband, das in einer Längsnut 15 des Profils 10 angeordnet ist, wobei die Längsnut 15 das Maßband 40 seitlich derart umgreift, dass das Maßband 40 von einem Ende des Profils 10 her in diese Längsnut 15 einschiebbar ist. Ein Beispiel einer derartigen Längsnut 14 ist in der Figur 4 dargestellt. Bei langen Messlängen ist das Maßband 40 bevorzugt an einem Ende P0 am Profil 10 ortsfest fixiert und am anderen Ende mittels einer am Profil 10 angeordneten Spannvorrichtung in Messrichtung X gespannt. Die auf das Maßband 40 damit einwirkende Spannkraft ist in Figur 1 mit F eingezeichnet.

Die erste Messteilung 41 sowie die zweite Messteilung 42 kann als inkrementale oder als absolute Messteilung ausgeführt sein.

## Patentansprüche

1. Positionsmesseinrichtung umfassend eine erste Baugruppe (1) und eine zweite Baugruppe (2), wobei
die erste Baugruppe (1) ein Profil (10) aufweist, das einen Maßstab (40) mit einer ersten Messteilung (41) trägt,
die zweite Baugruppe (2) eine erste Abtasteinheit (20) umfasst,
und zur Messung der Position eines ersten Objektes (100) gegenüber einem zweiten Objekt (200) die erste Baugruppe (1) am ersten zu messenden Objekt (100) und die zweite Baugruppe (2) am zweiten zu messenden Objekt (200) anbringbar ist und die erste Abtasteinheit (20) entlang eines Verfahrweges in Messrichtung (X) verfahrbar ist und dabei die erste Messteilung (41) des Maßstabs (40) abtastet,
**dadurch gekennzeichnet dass**
der Maßstab (40) eine zweite Messteilung (42) aufweist, und am Profil (10) zumindest eine zweite Abtasteinheit (30) angeordnet ist, mit der die zweite Messteilung (42) abtastbar ist und die zur Messung der Verlagerung des Maßstabs (40) gegenüber dem ersten Objekt (100) derart angeordnet ist, dass ein kollisionsfreies Verfahren der ersten Abtasteinheit (20) entlang des Verfahrweges von der zweiten Abtasteinheit (30) senkrecht zur Messrichtung (X) beabstandet ermöglicht ist.

2. Positionsmesseinrichtung nach Anspruch 1, wobei am Profil (10) mehrere in Messrichtung (X) voneinander beabstandete zweite Abtasteinheiten (30) befestigt sind.

3. Positionsmesseinrichtung nach einem der vorhergehenden Ansprüche, wobei die zweite Abtasteinheit (30) in Messrichtung (X) elastisch nachgiebig mit dem Profil (10) verbunden ist.

4. Positionsmesseinrichtung nach Anspruch 3, wobei die zweite Abtasteinheit (30) mittels eines in Messrichtung (X) auslenkbaren Festkörpergelenkes (11) am Profil (10) befestigt ist.

5. Positionsmesseinrichtung nach einem der vorhergehenden Ansprüche, wobei das Profil (10) eine Ausnehmung (12) aufweist, in welche die zweite Abtasteinheit (30) eingesetzt ist.

6. Positionsmesseinrichtung nach einem der vorhergehenden Ansprüche, wobei das Profil (10) ein Hohlprofil ist, in dessen Innenraum der Maßstab (40) angeordnet ist und der Innenraum den Verfahrweg der ersten Abtasteinheit (20) bildet.

7. Positionsmesseinrichtung nach Anspruch 5 und 6, wobei zwischen dem Profil (10) und der zweiten Abtasteinheit (30) eine Dichtung (13) vorgesehen ist.

8. Positionsmesseinrichtung nach einem der vorhergehenden Ansprüche, wobei der Maßstab (40) ausschließlich an einer einzigen Position (P0) am Profil (10) ortsfest fixiert ist und im übrigen Bereich derart am Profil (10) angeordnet ist, dass er sich relativ zum Profil (10) in Messrichtung (X) ausdehnen kann.

9. Positionsmesseinrichtung nach einem der vorhergehenden Ansprüche, wobei die zweite Messteilung (42) und die zweite Abtasteinheit (30) derart ausgebildet sind, dass eine optoelektrische Abtastung der zweiten Messteilung (42) ermöglicht ist.

10. Positionsmesseinrichtung nach einem der vorhergehenden Ansprüche, wobei die erste Messteilung (41) auf einer Seite des Maßstabs (40) angeordnet ist und die zweite Messteilung (42) auf der Rückseite des Maßstabs (40) angeordnet ist.

11. Positionsmesseinrichtung nach einem der vorhergehenden Ansprüche 1 bis 9, wobei die erste Messteilung (41) auf einer Seite des Maßstabs (40) angeordnet ist und die zweite Messteilung (42.1) auf der gleichen Seite neben der ersten Messteilung (41) angeordnet ist.

12. Positionsmesseinrichtung nach einem der vorhergehenden Ansprüche, wobei der Maßstab (40) ein Maßband ist.

13. Positionsmesseinrichtung nach Anspruch 12, wobei das Maßband ein Metallband ist.

14. Positionsmesseinrichtung nach Anspruch 12 oder 13, wobei das Maßband in einer Längsnut (15) des Profils (10) angeordnet ist.

15. Positionsmesseinrichtung nach einem der Ansprüche 12 bis 14, wobei das Maßband an einem Ende ortsfest am Profil (10) festgelegt ist und am anderen Ende gespannt ist.

## Claims

1. Position measuring device comprising a first assembly (1) and a second assembly (2), wherein the first assembly (1) has a profile (10) which carries a scale (40) with a first measuring graduation (41),
the second assembly (2) comprises a first scanning unit (20),
and, for the purposes of measuring the position of a first object (100) in relation to a second object (200), the first assembly (1) is appliable to the first object (100) to be measured and the second assembly (2) is appliable to the second object (200) to be measured and the first scanning unit (20) is displaceable along a travel in the measurement direction (X) and, in the process, scans the first measuring graduation (41) of the scale (40),
**characterized in that**
the scale (40) has a second measuring graduation (42) and at least one second scanning unit (30) is arranged on the profile (10), by means of which second scanning unit the second measuring graduation (42) is able to be scanned and which second scanning unit, for the purposes of measuring the displacement of the scale (40), is arranged in relation to the first object (100) in such a way that a collision-free displacement of the first scanning unit (20) along the travel at a distance from the second scanning unit (30) perpendicular to the measurement direction (X) is rendered possible.

2. Position measuring device according to Claim 1, wherein a plurality of second scanning units (30) which are spaced apart in the measurement direction (X) are fastened to the profile (10).

3. Position measuring device according to one of the preceding claims, wherein the second scanning unit (30) is connected to the profile (10) in a manner that elastically yields in the measurement direction (X).

4. Position measuring device according to Claim 3, wherein the second scanning unit (30) is fastened to the profile (10) by means of a flexure bearing (11) which is deflectable in the measurement direction (X).

5. Position measuring device according to one of the preceding claims, wherein the profile (10) has a recess (12), into which the second scanning unit (30) has been inserted.

6. Position measuring device according to one of the preceding claims, wherein the profile (10) is a hollow profile, in the interior of which the scale (40) is arranged, and the interior forms the travel of the first scanning unit (20).

7. Position measuring device according to Claims 5 and 6, wherein a seal (13) is provided between the profile (10) and the second scanning unit (30).

8. Position measuring device according to one of the preceding claims, wherein the scale (40) is fixed in a stationary manner only at a single position (P0) on the profile (10) and arranged in the remaining region on the profile (10) in such a way that it can expand relative to the profile (10) in the measurement direction (X).

9. Position measuring device according to one of the preceding claims, wherein the second measuring graduation (42) and the second scanning unit (30) are embodied in such a way that optoelectric scanning of the second measuring graduation (42) is facilitated.

10. Position measuring device according to one of the preceding claims, wherein the first measuring graduation (41) is arranged on one side of the scale (40) and the second measuring graduation (42) is arranged on the rear side of the scale (40).

11. Position measuring device according to one of the preceding Claims 1 to 9, wherein the first measuring graduation (41) is arranged on one side of the scale (40) and the second measuring graduation (42.1) is arranged next to the first measuring graduation (41) on the same side.

12. Position measuring device according to one of the preceding claims, wherein the scale (40) is a tape measure.

13. Position measuring device according to Claim 12, wherein the tape measure is a metal tape.

14. Position measuring device according to Claim 12 or 13, wherein the measuring tape is arranged in a longitudinal groove (15) of the profile (10).

15. Position measuring device according to one of Claims 12 to 14, wherein the measuring tape is secured in a stationary manner on the profile (10) at one end and tensioned at the other end.

## Revendications

1. Dispositif de mesure de position comprenant un premier module (1) et un deuxième module (2), dans lequel
le premier module (1) présente un profil (10) qui porte une échelle (40) ayant une première graduation de mesure (41),
le deuxième module (2) comprend une première unité de balayage (20) et,
pour mesurer la position d'un premier objet (100) par rapport à un deuxième objet (200), le premier module (1) peut être monté sur le premier objet (100) à mesurer le deuxième module (2) peut être monté sur le deuxième objet (200) à mesurer et la première unité de balayage (20) peut être déplacée le long d'une course de déplacement dans la direction de mesure (X) et balaye ainsi la première graduation de mesure (41) de l'échelle (40),
**caractérisé en ce que** l'échelle (40) présente une deuxième graduation de mesure (42) et **en ce qu'**une deuxième unité de balayage (30) est disposée sur le profil (10), unité de balayage au moyen de laquelle la deuxième graduation de mesure (42) peut être balayée et qui est agencée, pour mesurer le décalage de l'échelle (40) par rapport au premier objet (100), de manière à ce qu'un déplacement sans collision de la première unité de balayage (20) le long de la course de déplacement de la deuxième unité de balayage (30) soit rendu possible de manière espacée perpendiculairement à la direction de mesure (X).

2. Dispositif de mesure de position selon la revendication 1, dans lequel de multiples deuxièmes unités de balayage (30) sont fixées de manière espacée les unes des autres dans la direction de mesure (X) sur le profil (10).

3. Dispositif de mesure de position selon l'une quelconque des revendications précédentes, dans lequel la deuxième unité de balayage (30) est reliée au profil (10) de manière élastiquement souple dans la direction de mesure (X).

4. Dispositif de mesure de position selon la revendication 3, dans lequel la deuxième unité de balayage (30) est fixée au profil (10) au moyen d'une articulation flexible (11) pouvant être déviée dans la direction de mesure (X).

5. Dispositif de mesure de position selon l'une quelconque des revendications précédentes, dans lequel le profil (10) présente un évidement (12) dans lequel peut être introduite la deuxième unité de balayage (30).

6. Dispositif de mesure de position selon l'une quelconque des revendications précédentes, dans lequel le profil (10) est un profil creux dans l'espace intérieur duquel est disposée l'échelle (40), l'espace intérieur formant la course de déplacement de la première unité de balayage (20).

7. Dispositif de mesure de position selon les revendications 5 et 6, dans lequel il est prévu un joint d'étanchéité (13) entre le profil (10) et la deuxième unité de balayage (30).

8. Dispositif de mesure de position selon l'une quelconque des revendications précédentes, dans lequel l'échelle (40) est montée de manière fixe exclusivement en une seule position (P0) sur le profil (10) et dans les parties restantes, est disposée sur le profil (10) de manière à ce qu'elle puisse s'étendre dans la direction de mesure (X) par rapport au profil (10).

9. Dispositif de mesure de position selon l'une quelconque des revendications précédentes, dans lequel la deuxième graduation de mesure (42) et la deuxième unité de balayage (30) sont réalisées de manière à permettre un balayage opto-électrique de la deuxième graduation de mesure (42).

10. Dispositif de mesure de position selon l'une quelconque des revendications précédentes, dans lequel la première graduation de mesure (41) est disposée sur une face de l'échelle (40) et la deuxième graduation de mesure (42) est disposée sur la face arrière de l'échelle (40).

11. Dispositif de mesure de position selon l'une quelconque des revendications 1 à 9, dans lequel la première graduation de mesure (41) est disposée sur une face de l'échelle (40) et la deuxième graduation de mesure (42.1) est disposée sur la même face à côté de la première graduation de mesure (41).

12. Dispositif de mesure de position selon l'une quelconque des revendications précédentes, dans lequel l'échelle (40) est un décamètre à ruban.

13. Dispositif de mesure de position selon la revendication 12, dans lequel le décamètre à ruban est un ruban métallique.

14. Dispositif de mesure de position selon la revendication 12 ou 13, dans lequel le décamètre à ruban est disposé dans une encoche longitudinale (15) du profil (10).

15. Dispositif de mesure de position selon l'une quelconque des revendications 12 à 14, dans lequel le décamètre à ruban est monté en position fixe sur le profil (10) à une extrémité et est tendu à l'autre extrémité.
